(19) Europäisches Patentamt / European Patent Office / Office européen des brevets

(11) **EP 2 056 520 B1**

(12) **EUROPEAN PATENT SPECIFICATION**

(45) Date of publication and mention
of the grant of the patent:
**09.11.2011  Bulletin 2011/45**

(51) Int Cl.:
*H04L 9/08* *(2006.01)*     *H04L 29/06* *(2006.01)*

(21) Application number: **07764283.3**

(22) Date of filing: **26.07.2007**

(86) International application number:
**PCT/CN2007/070361**

(87) International publication number:
**WO 2008/025270 (06.03.2008 Gazette 2008/10)**

(54) **A METHOD FOR BINDING UPDATE IN THE MOBILE IPV6 AND A MOBILE IPV6 COMMUNICATION SYSTEM**

VERFAHREN ZUR VERBINDUNGSAKTUALISIERUNG IN EINEM MOBILSYSTEM NACH IPV6 UND MOBILKOMMUNIKATIONSSYSTEM NACH IPV6

PROCÉDÉ POUR UNE MISE À JOUR DE LIAISON DANS LE SYSTÈME MOBILE IPV6 ET SYSTÈME DE COMMUNICATION MOBILE IPV6

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **31.08.2006  CN 200610111876**

(43) Date of publication of application:
**06.05.2009  Bulletin 2009/19**

(73) Proprietor: **Huawei Technologies Co., Ltd.
Longgang District, Shenzhen
Guangdong 518129 (CN)**

(72) Inventor: **LI, Chunqiang
Guangdong 518129 (CN)**

(74) Representative: **Thun, Clemens
Mitscherlich & Partner
Sonnenstraße 33
80331 München (DE)**

(56) References cited:
CN-A- 1 697 548          CN-A- 101 001 261
US-A1- 2003 211 842     US-A1- 2004 236 937

• QIU INSTITUTE FOR INFOCOMM RESEARCH F ZHAO UC DAVIS R KOODLI NOKIA RESEARCH CENTER Y: "Mobile IPv6 Location Privacy Solutions; draft-irtf-mobopts-location-p rivacy-solutions-02.txt" IETF STANDARD-WORKING-DRAFT, INTERNET ENGINEERING TASK FORCE, IETF, CH, no. 2, 23 June 2006 (2006-06-23), XP015045182 ISSN: 0000-0004
• YING QIU ET AL: "Protocol for hiding movement of mobile nodes in mobile IPv6" VEHICULAR TECHNOLOGY CONFERENCE, 2005. VTC-2005-FALL. 2005 IEEE 62ND DALLAS, TX, USA 25-28 SEPT., 2005, PISCATAWAY, NJ, USA,IEEE LNKD-DOI:10.1109/VETECF.2005.1558037, vol. 2, 25 September 2005 (2005-09-25), pages 812-815, XP010878596 ISBN: 978-0-7803-9152-9
• JOHNSON RICE UNIVERSITY C PERKINS NOKIA RESEARCH CENTER J ARKKO ERICSSON D: "Mobility Support in IPv6; rfc3775.txt" IETF STANDARD, INTERNET ENGINEERING TASK FORCE, IETF, CH, 1 June 2004 (2004-06-01), XP015009555 ISSN: 0000-0003

**Description**

**BACKGROUND OF THE INVENTION**

**Field of the Invention**

The present invention relates to the technical field of network communication, and more particularly to a method for binding update in the mobile Internet Protocol version 6 (IPv6) and a mobile IPv6 communication system.

**Description of the Related Art**

The mobile Internet Protocol version 6 (IPv6) is a mobility solution on the network layer. The mobile IPv6 has three basic network entities, namely, mobile node (MN), correspondent node (CN), and home agent (HA).

An MN can be uniquely identified by a home address (HoA). When the MN roams to a foreign network, a care-of address (CoA) will be generated in a certain manner. According to the mobile IPv6, in the process that an MN moves from one link to another, the ongoing communication of the MN using the HoA may not be interrupted. The mobility of the node is transparent to the transfer layer and other upper-layer protocols. The mobile IPv6 defines two different modes to solve the mobility problem, i.e., a bi-directional tunnel mode and a route optimization mode.

In the bi-directional tunnel mode, the MN informs the HA of the CoA through a binding update (BU) message. The HA intercepts packets sent to the home network of the MN for communication with the MN, and forwards the packets to the MN in the tunnel mode. When the MN sends packets to a CN, the packets must be sent to the HA in the tunnel mode, and the HA decapsulates and forwards the tunnel packets to the CN.

In the route optimization mode, the MN needs to register with the CN. Firstly, a return routability procedure (RRP) is performed. The RRP includes the exchange of two messages pairs between the MN and CN: the Home Test Init (HoTI) message and Home Test (HoT) message, and the Care-of Test Init (CoTI) message and Care-of Test (CoT) message. The HoTI and HoT are forwarded by the HA, and the CoTI and CoT are directly exchanged between the MN and the CN. After the RRP is successfully performed, the MN is able to binding update the CoA and HoA into a binding cache list of the CN through a BU message, and directly transmits packets to the CN in the subsequent communication. Thus, the packets need not to be forwarded by the HA.

The privacy of location is vital in the mobile IPv6 communication. Without concealment, sensitive data of a subscriber may be collected and analyzed, and activities of the subscriber may be detected and traced, thus resulting in a serious threat to the security of the mobile subscriber. When the MN is on a foreign link, the inner header of the packet transmitted between the MN and the HA through a tunnel carries the HoA of the MN. When the MN communicates with the CN in the route optimization mode, the HoA option contained in the packet sent from the MN to the CN includes the HoA of the MN, and the Type-2 routing header contained in the packet sent from the CN to the MN also includes the HoA of the MN.

In order not to expose the HoA of the MN on a foreign link to an eavesdropper, currently, a substitute of HoA (SHoA) is used to replace the real HoA. However, to implement this method, in addition to the HoA and CoA of the MN, the SHoA and the HoA also need to be bindingly updated in the BU process.

An implementing method is described as follows. 16 bits out of the 128-bit IPv6 address space are allocated as a prefix of temporary mobile identifiers (TMIs), and all addresses using the prefix are regarded as the TMIs which are specified to be unroutable. A 128-bit TMI is allocated to each MN, and the TMI changes periodically based on a certain algorithm. In the BU process to the CN, the TMI is placed in the HoA option, and the real HoA is placed in a redefined BU sub-option. The CN binds the TMI, HoA, and CoA. In the subsequent communication, the MN and CN adopt the TMI to replace the current HoA in the HoA option and the Type-2 routing header.

In the implementation of the present invention, the inventor finds out that the above method at least has the following defects: 1. the HoA in the RRP is not protected, and the BU packet still has to directly carry the HoA; 2. the IPv6 address space is permanently occupied; 3. if the periodical change of the TMI and the change of the CoA are not synchronous, extra RRPs need to be performed, and more network resources will be consumed; and 4. if multiple HoAs of an MN are bound to the same CoA, confusion may occur.

In addition, when the MN performs the binding update, the sequence numbers contained in the BU packets may also expose the activities of the mobile subscriber. If the increment of the sequence numbers of the BU packets is fixed, or the rules of the change of the sequence numbers can be easily identified, the eavesdropper may still guess the movement of the MN by detecting a series of BU messages.

Document XP015045182 (draft-irtf-mobopts-location-privacy-solutions-02 - Mobile IPv6 Location Privacy Solutions) describes that mobile IPv6 enables mobile nodes to remain reachable while roaming on the Internet. With its current specification, the location of a mobile node can be revealed and its movement can be tracked by simply monitoring its IP packets. In this document is looked into the MIP6 location privacy problem and are proposed efficient and secure techniques to protect the location privacy of a mobile node.

US 2004/236937 A1 provides location privacy against third parties while allowing route-optimized communication between the correspondent node and the mobile node. The mobile node's home address is hidden from an external observer thereby thwarting traffic analysis based attacks where a Home Address is correlated with a Care of Address of a mobile node, MN. A "privacy label" is used in place of a home address associated with the mobile node. The privacy label is supplied by the mobile node to the correspondent node in a way that that allows the privacy label to be bound to the home address, but lacks to allow the home address to be visible during the exchange. The privacy label may be also used to help prevent against replay attacks.

**SUMMARY OF THE INVENTION**

Accordingly, the present invention is directed to a method for binding update in the mobile IPv6 and a corresponding mobile IPv6 communication system, so as to enhance the security of home addresses (HoAs) in a binding update (BU) process.

To achieve the objective of the present invention, technical solutions are provided as described below. A method for binding update in the mobile IPv6 includes the following steps: performing, by a correspondent node (CN), a return routability procedure (RRP), in which a home address (HoA) of a mobile node (MN) is replaced with a substitute of home address (SHoA); receiving, by the CN, a binding update (BU) message from the MN, wherein the BU message carries the SHoA, with which the HoA of the MN is replaced and the HoA encrypted with a binding management key (Kbm); wherein the Kbm is generated based on keygen tokens obtained by the MN from the CN in the RRP; and binding, by the CN, the SHoA, the HoA, and a care-of address (CoA) according to the BU message; wherein the encrypted HoA is carried in an encrypted HoA option in the BU message; the BU message further comprises an HoA index, the value of which is a pointer value and is corresponding to each HoA of the MN; and the binding by the CN according to the BU message further comprises that the CN binds the SHoA, the HoA, the HoA index, and the CoA according to the BU message.

A mobile IPv6 communication system including an MN, a CN, and a home agent (HA) is provided. The MN (100) is adapted to send a Care-of Test Init (CoTI) message to the CN (200), send a Home Test Init (HoTI) message to the HA (300), receive a Care-of Test (CoT) massage containing a care-of keygen token returned by the CN (200), receive a Home Test (HoT) message containing a home keygen token forwarded by the HA (300), generate a binding management key (Kbm) based on the home keygen token and the care-of keygen token, and send to the CNa BU message including a substitute of home address (SHoA), with which a home address (HoA) of the MN is replaced. The HA (300) is adapted to forward the HoTI message to the CN (200), with carrying the SHoA in a destination option extension header containing an SHoA option of the HoTI message, receive the HoT message sent by the CN (200), search for the corresponding HoA of the MN (100) according to the SHoA in a Type-2 routing header of the HoT message, and forward the HoT message to the MN (100) in a tunnel mode. The CN (200) is adapted to receive the HoTI message forwarded by the HA (300), replace the HoA with the SHoA to generate the home keygen token, return the HoT message containing the home keygen token to the HA (300), and carrying the SHoA in the Type-2 routing header of the HoT message, and bind the SHoA, the HoA, and a care-of address (CoA) according to the BU message sent from the MN; wherein the HoA, which is encrypted with the Kbm, is carried in an encrypted HoA option in the BU message; and the BU message further comprises an HoA index, the value of which is a pointer value and is corresponding to each HoA of the MN.

In an embodiment of the present invention, an MN in an IPv6 communication system is provided. The MN includes a first return routability unit (110), adapted to perform a return routability procedure (RRP), in which a home address (HoA) of the MN is replaced with a substitute of home address (SHoA), and during which keygen tokens are obtained from a correspondent node (CN); a binding management key (Kbm) unit (140), adapted to calculate and generate the Kbm based on the keygen tokens; and a first binding update (BU) unit (120), adapted to send a BU message to the CN by replacing the HoA of the MN with the SHoA; and carry the HoA encrypted with the Kbm in the BU message; wherein the encrypted HoA is carried in an encrypted HoA option in the BU message; and the BU message further comprises an HoA index, the value of which is a pointer value and is corresponding to each HoA of the MN.

In an embodiment of the present invention, a CN in an IPv6 communication system is provided. The CN includes a second return routability unit (210), adapted to perform a return routability procedure (RRP), , in which a home address (HoA) of the MN is replaced with a substitute of home address (SHoA), and during which keygen tokens are returned to a mobile node (MN) in the RRP; a binding management key (Kbm) unit (240), adapted to calculate and generate the Kbm based on the keygen tokens; and a second binding update (BU) unit (220), adapted to obtain a home address (HoA) of the MN from a BU message sent by the MN, and bind a substitute of home address (SHoA) of the MN, the HoA of the MN, and a care-of address (CoA) of the MN; wherein the HoA is encrypted with the Kbm; wherein the encrypted HoA is carried in an encrypted HoA option in the BU message; the BU message further comprises an HoA index, the value of which is a pointer value and is corresponding to each HoA of the MN; the HoA is obtained by being recovered from the encrypted HoA option with the Kbm; and the second BU unit (220) comprises an address index module adapted to bind a value of the HoA index, the SHoA, the HoA, and the CoA.

In the method of the present invention, the SHoA replaces the HoA to perform the RRP, and the HoA in the BU packet is sent in a form of an encrypted option after the Kbm is obtained. As such, the HoA appears only once in an encrypted form in the packet sent to the CN in the BU process, thus improving the security of the HoA in the BU process.

## BRIEF DESCRIPTION OF THE DRAWINGS

The present invention will become more fully understood from the detailed description given herein below for illustration only, and thus are not limitative of the present invention, and wherein:

FIG 1 is a schematic flow chart of a method for binding update in the mobile IPv6 according to a first embodiment of the present invention;

FIG. 2 is a schematic flow chart of a method for binding update in the mobile IPv6 according to a second embodiment of the present invention;

FIG 3 is a schematic flow chart of a method for binding update in the mobile IPv6 according to a third embodiment of the present invention;

FIG 4 is a schematic structural view of a mobile IPv6 transmission system according to a fourth embodiment of the present invention; and

FIG 5 is a schematic view showing internal structures of an MN, a CN, and an HA in the mobile IPv6 transmission system according to the fourth embodiment of the present invention.

## DETAILED DESCRIPTION OF THE EMBODIMENTS

In a method for binding update in the mobile IPv6 provided in the present invention, a substitute of home address (SHoA) replaces a home address (HoA) to perform a return routability procedure (RRP), and after a binding management key (Kbm) is obtained, the HoA in a binding update (BU) packet is sent in a form of an encrypted option. In the BU process, an HoA index may be bound as well. The present invention also provides a preferred method for calculating an SHoA and a sequence number of a BU packet. Moreover, the present invention further provides a related mobile IPv6 transmission system. The methods and system of the present invention are illustrated in detail below.

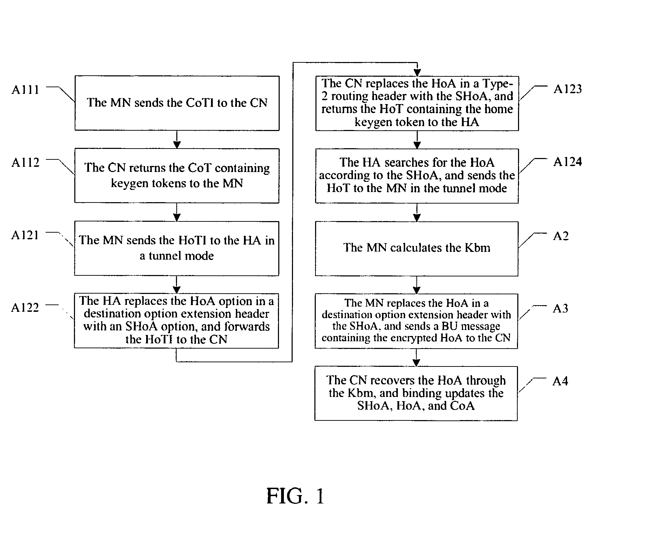

Embodiment 1: a method for binding update in the mobile IPv6. FIG. 1 shows the process of the method including the following steps.

A1. A mobile node (MN) perform an RRP with a home agent (HA) and a correspondent node (CN) by using a SHoA to replace a HoA of the MN.

The RRP is a procedure mainly for ensuring the security of the communication between a MN and a CN. The principle of the RRP is to authenticate the registration between the MN and the CN by encrypting the signaling exchanged there-between. The CN may figure out whether it can access the MN in the optimized routing and triangular routing modes through the RRP. If the RRP test fails, the CN cannot receive the BU from the MN, nor directly send packets to a care-of address (CoA) of the MN. The test generally includes the transmission of two message pairs: the Home Test Init (HoTI) message and Home Test (HoT) message, and the Care-of Test Init (CoTI) message and Care-of Test (CoT) message. The CoTI and CoT messages are directly exchanged between the MN and the CN, and the HoTI and HoT messages are forwarded by the HA between the MN and the CN. For the MN, the HoTI and CoTI messages may be transmitted at the same time, and for the CN, the HoT and CoT messages may also be transmitted at the same time.

As the packets in the interaction of the CoTI and CoT messages do not involve the HoA of the MN, this part of interaction can be implemented by the existing procedures in the present invention. The interaction between the HoTI and HoT messages includes a part between the MN and HA and a part between the HA and CN. The packets are sent in a tunnel mode between the MN and HA, so the inner packet is protected by an encapsulating security payload (ESP) header of the tunnel mode, and the security level is high. Therefore, the present invention mainly deals with the part of the interaction between the HA and CN in the RRP.

In this embodiment, the RRP is implemented as follows:

A11. The CoTI message interacts with the CoT message. This step further includes the following two sub-steps.

A111. The MN sends the CoTI message to the CN. In an IPv6 header of the packet, a source address is the CoA, a destination address is the CN, and a mobility header is the CoTI message.

A112. After receiving the CoTI message, the CN calculates and generates a care-of Keygen token according to the CoA, and then sends the CoT message containing the care-of keygen token to the MN. In an IPv6 header of the packet, a source address is the CN, a destination address is the CoA, and a mobility header is the CoT message.

A12. The HoTI message interacts with the HoT message. This step further includes the following four sub-steps.

A121. The MN sends the HoTI message to the HA in the tunnel mode. In an outer IPv6 header of the packet, a source address is the CoA, and a destination address is the HA. In an inner IPv6 header protected by the ESP header in the tunnel mode, a source address is the HoA, a destination address is the CN, and a mobility header is the HoTI message.

A 122. After receiving the HoTI message sent by the MN in the tunnel mode, the HA performs an IP protocol security (IPSec) processing to obtain the inner IPv6 packet. The source address in the inner packet is replaced by the HA, and a destination option extension header is added between the IPv6 packet and the mobility header to forward the HoTI message to the CN. Generally, an HoA option is placed in the destination option extension header to carry the HoA. In this embodiment, the HA replaces the HoA with a corresponding SHoA so as to hide the HoA of the MN. Thus, a new option, that is, an SHoA option is used to carry the SHoA in the destination extension header.

To guarantee the privacy of the SHoA, and to ensure that the SHoA can be obtained by the HA and MN through calculation, the method for calculating the SHoA in this embodiment is as follows:

$$SHoA = First\,(128, PRF\,(Kmh, Message1)\,)$$

where Kmh is a shared key between the MN and HA, and Message1 is composed of information that may be shared by the MN and HA, such as the CoA, HoA, CN address, and HA address. In this embodiment, Message1 = (CoA|HoA|CN), that is, Message1 is formed by connecting the CoA, HoA, and CN. The SHoA may change with the CoA by adding the CoA into the expression for generating the SHoA, different HoAs bound to the same CoA may generate different SHoAs by adding the HoA into the expression, and different CN communications may use different SHoAs by adding the CN into the expression. PRF is a pseudo-random function, indicating that the Kmh is employed to process the message Message1 to generate a pseudo-random output. Here, PRF may be a Hash message authentication code algorithm function, for example, HMAC_SHA1. First is a cut-off function for cutting off the first few bits of the output hash of the PRF. As the SHoA is used to replace the HoA, the length of the SHoA must be consistent with that of the HoA, and thus 128 bits are cut off in the above expression. After the HA calculates the SHoA, the association between the SHoA and the HoA is stored.

A 123. After receiving the HoTI message, the CN knows that the SHoA is used according to the option type in the destination option extension header. Therefore, when a home keygen token is calculated, the SHoA is used. Then, the HoT message containing the home keygen token is sent. Generally, a Type-2 routing header needs to be configured in a sent packet to carry the HoA of the MN. In the present invention, the CN uses the corresponding SHoA to replace the HoA. In an IPv6 header of the sent packet, a source address is the CN, a destination address is the HA, the Type-2 routing header carries the SHoA, and a mobility header is the HoT message.

A124. After receiving the HoT message sent by the CN, the HA needs to forward the HoT message to the MN in the tunnel mode. Firstly, the corresponding HoA is found according to the SHoA in the Type-2 routing header, and then the destination address in the IPv6 header of the HoT message is replaced by the HoA. After that, the tunnel encapsulation and packet sending are performed. In the outer IPv6 header of the sent packet, a source address is the HA, a destination address of the CoA, a source address in the inner IPv6 header protected by the ESP header in the tunnel mode is the CN, a destination address is the HoA, and a mobility header is the HoT message.

Here, Steps A 11 and A 12 may be performed concurrently.

A2. After the MN receives the CoT message directly sent by the CN and the HoT message forwarded by the HA, the RRP ends, and the MN generates a Kbm according to the home keygen token and care-of keygen token returned by the CN. Generally, the Kbm is calculated according to the following expression:

$$Kbm = HMAC\_SHA1\,(Home\ Keygen\ Token|\ Care\text{-}of\ Keygen\ Token)$$

That is, the Kbm is obtained by performing a Hash algorithm HMAC_SHA1 on the sequence composed of the home keygen token and care-of keygen token.

A3. The MN sends the BU message to the CN to perform the binding update. Normally, the packet in the BU message carries the destination option extension header including the HoA option for carrying the HoA. In the present invention, to hide the HoA, the MN places the corresponding SHoA in the HoA option to replace the HoA. Meanwhile, to send the association between the HoA and SHoA to the CN, the MN uses the encrypted HoA option in the BU message, and places the HoA encrypted with the Kbm in the encrypted HoA option. In an IPv6 header of the BU packet, a source address is the CoA, and the destination address is the CN. The destination option extension header carries the HoA option for placing the SHoA, and a mobility header is the BU message including the options of the sequence number, encrypted HoA option, home temporary random number index, care-of temporary random number index, and message authorization code. Among the above, the encrypted HoA option is newly added in the present invention.

A4. After receiving the BU message from the MN, the CN recovers the HoA from the encrypted HoA option through the Kbm, and then binding updates the SHoA, HoA, and CoA to the binding cache list. Normally, the CN returns a binding acknowledge (BA) message to the MN, indicating that the BU process is completed. Then, the MN and CN can perform packet transmission directly in the route optimization mode.

To prevent the HoA of the MN from being exposed to an eavesdropper in the subsequent packet transmission, the HoA option of the destination option extension header carries the SHoA in the packet sent to the CN from the MN, and the Type-2 routing header carries the SHoA in the packet sent to the MN from the CN. Thus, the eavesdropper cannot obtain the HoA of a mobile subscriber through packet interception.

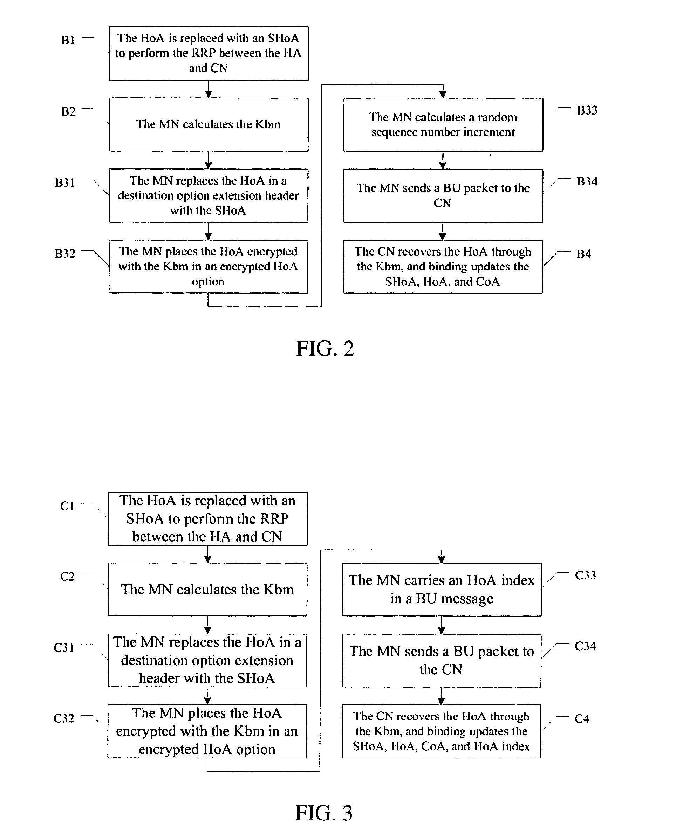

Embodiment 2: a method for binding update in the mobile IPv6. FIG 2 shows the process of the method, which includes steps similar to those of Embodiment 1. The difference between Embodiment 2 and Embodiment 1 lies in that this embodiment adopts a method for generating a random sequence number of a BU packet in the following steps.

B1. An SHoA replaces an HoA to perform an RRP between an HA and a CN. For details, refer to Step A1 of Embodiment 1.

B2. After an MN receives a CoT message directly sent by the CN and an HoT message forwarded by the HA, the RRP ends. The MN generates a Kbm according to a home keygen token and a care-of keygen token returned by the CN.

B3. The MN sends a BU message to the CN to perform the binding update. This step further includes the following four sub-steps.

B31. The MN places the corresponding SHoA in an HoA option of a destination option extension header of a packet for sending the BU message to replace the HoA.

B32. The BU message uses an encrypted HoA option, and places the HoA encrypted with a Kbm in the encrypted HoA option.

B33. A random sequence number increment (seq_increment) is calculated. The obtained seq_increment is added to a previous sequence number to obtain a sequence number of the BU message, and the sequence number is placed in an option of the BU message. In this embodiment, the expression for calculating the seq_increment is as follows:

seq_increment = First (8, PRF (Kbm, Message2))

where Message2 is a message containing a previous sequence number (Seq#) or a previous seq_increment, and is expressed as follows:

Message2 = (Seq#|Expression), or

Message2 = (seq_increment# |Expression);

where the Expression is obtained by combining the information associated with and shared by the MN and CN, for example, the CoA and HoA of the MN and the address of the CN. Certainly, the Expression may be null. In this embodiment, the pseudo-random function PRF is HMAC_SHA 1, and the First function cuts off the first eight bits.

In particular, to improve the intractability of the sequence numbers, if the seq_increment calculated according to the previous method is zero, a new seq_increment is calculated with the following expression:

$$\text{seq\_increment} = \text{First} (8, \text{Kbm XOR HoA})$$

where XOR is an Exclusive-OR function for performing an Exclusive-OR operation on the Kbm and HoA.

Here, Steps B31 to B33 may be performed concurrently.

B34: The BU packet is sent. In an IPv6 header of the BU packet, a source address is the CoA, and a destination address is the CN. A destination option extension header carries an HoA option for placing the SHoA, and a mobility header is the BU message including options such as the sequence number and the encrypted HoA option.

B4: After receiving the BU message from the MN, the CN recovers the HoA from the encrypted HoA option through the Kbm, and then bindingly updates the SHoA, HoA, and CoA to the binding cache list.

Embodiment 3: a method for binding update in the mobile IPv6. FIG 3 shows the process of the method, which includes steps similar to those of Embodiment 1. The difference between Embodiment 3 and Embodiment 1 lies in that in this embodiment, when an MN sends a BU packet to perform the binding update, an HoA index corresponding to each HoA is also carried to bind the HoA, CoA, SHoA, and HoA index. Embodiment 3 includes the following steps.

C1: An SHoA replaces an HoA to perform an RRP between an HA and a CN. For details, refer to Step A1 of Embodiment 1.

C2. After an MN receives a CoT message directly sent by the CN and an HoT message forwarded by the HA, the RRP ends. The MN generates a Kbm according to a home keygen token and a care-of keygen token returned by the CN.

C3. The MN sends a BU message to the CN to perform the binding update. This step further includes the following four sub-steps.

C31: The MN places the corresponding SHoA in an HoA option of a packet for sending the BU message to replace the HoA.

C32: The BU message uses an encrypted HoA option, and places the HoA encrypted with a Kbm in the encrypted HoA option.

C33. The BU message carries an HoA index.

The HoA index is a value corresponding to each HoA of the MN provided by the MN. When an MN has one or more HoAs, an HoA list is stored in a cache of the MN. The list is stored as an array, a chained list, or in other formats. Each of the n (n>=1) HoAs of the MN is uniquely mapped to a number set of 0 to n-1 (or I to n). For example, 0 to n-1 (or 1 to n) are array subscripts of the HoA list stored as the array, or marks of the storage positions of the HoAs. Therefore, the array subscripts of the HoA list of the MN can be used as the HoA index, through which the corresponding HoAs can be obtained directly.

Here, Steps C31 to C33 may be performed concurrently.

C34. The BU packet is sent. In an IPv6 header of the BU packet, a source address is the CoA, and a destination address is the CN. A destination option extension header carries an HoA option for placing the SHoA, and a mobility header is the BU message including options such as the sequence number, the encrypted HoA option, and the HoA index.

C4. After receiving the BU message from the MN, the CN recovers the HoA from the encrypted HoA option through the Kbm, and then bindingly updates the SHoA, HoA, CoA, and HoA index to the binding cache list.

Certainly, as the HoA index needs to be stored, binding cache entries of the HA and of the CN must be further added with an HoA index field.

After the binding update of this embodiment is completed, in the subsequent packet sending, a new "binding index extension header" carrying the HoA index may be used to replace the HoA option or the Type-2 routing header. The HoA index is but a short pointer value, and the HoA option and Type-2 routing header both have 128 bits no matter carrying the HoA or SHoA. Therefore, the length of the header is greatly reduced. Further, as the parameter corresponding to the HoA appearing in the packet is only the HoA index, the security is improved. Certainly, the "binding index extension header" is not mandatory, and a "binding index option" may be added to the mobility header to carry the HoA index.

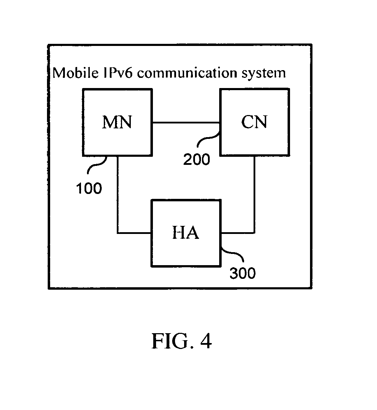

Embodiment 4: a mobile IPv6 communication system. As shown in FIG. 4, the system includes an MN 100, a CN 200, and an HA 300.

The MN 100 is adapted to send a CoTI message to the CN 200, send an HoTI message to the HA 300, receive a CoT massage containing a care-of keygen token returned by the CN 200, receive an HoT message containing a home keygen token forwarded by the HA 300, generate a Kbm based on the home keygen token and the care-of keygen token, add an encrypted HoA option in a BU message carrying an HoA encrypted with the Kbm, and use an SHoA to replace the HoA for sending the BU message to the CN 200.

The HA 300 is adapted to forward the HoTI message to the CN 200, carry a destination option extension header containing an SHoA option and carry the SHoA in a sent packet, receive the HoT message sent by the CN 200, search for the corresponding HoA according to the SHoA in a Type-2 routing header in the packet, and forward the HoT message to the MN 100 in a tunnel mode.

The CN 200 is adapted to receive the HoTI message forwarded by the HA 300, replace the HoA with the SHoA to generate the home keygen token, return the HoT message containing the home keygen token to the HA 300, carry the Type-2 routing header carrying the SHoA in the sent packet, and bind the SHoA, the HoA, and a CoA according to the BU message.

The system of this embodiment may be applied in the BU methods of Embodiments 1 to 3.

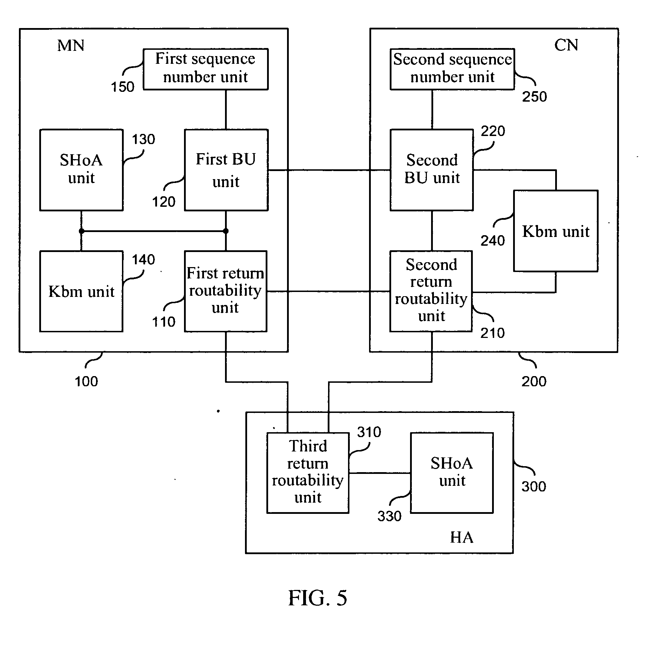

FIG. 5 shows the internal structures of the MN 100, the CN 200, and the HA 300 of the mobile IPv6 communication system in Embodiment 4.

The MN 100 includes a first return routability unit 110, a first BU unit 120, and a Kbm unit 140, and may further include an SHoA unit 130 and a first sequence number unit 150.

The SHoA unit 130 is adapted to calculate and generate the SHoA according to a shared key with the HA 300 and a message containing the CoA, the HoA, an address of the CN 200, and/or an address of the HA 300, and provide the SHoA to the first return routability unit 110 and the first BU unit 120 for use.

The first return routability unit 110 is adapted to perform a return routability procedure (RRP) including obtaining keygen tokens from a second return routability unit 220 of the CN 200, in which the keygen tokens include the care-of keygen token and the home keygen token obtained from the CoT message and the HoT message respectively, and outputting the keygen tokens to the Kbm unit 140.

The Kbm unit 140 is adapted to generate the Kbm based on the keygen tokens, and provide the Kbm to the first return routability unit 110 and the first BU unit 120 for use.

The first BU unit 120 is adapted to use the SHoA to replace the HoA for sending the BU message to a second BU unit 220 of the CN 200, and carry the HoA encrypted with the Kbm in the BU message. Thus, the CN 200 can update the binding of the SHoA, HoA, and CoA accordingly. The first BU unit 120 may carry an HoA index corresponding to each HoA in the BU message, so the CN 200 may bind the HoA index, SHoA, HoA, and CoA.

The BU message often carries a sequence number, which may be provided by the first BU unit 150. The first BU unit 150 adds a previous sequence number and a current sequence number increment to generate a current sequence number. Here, the current sequence number increment is calculated according to the Kbm and the previous sequence number or a previous sequence number increment. Details of the algorithm for calculating the sequence number increment are described in the above embodiments of the method, and will not be described herein again.

The CN 200 includes a second return routability unit 210, a second BU unit 220, and a Kbm unit 240, and may further include a second sequence number unit 250.

The second return routability unit 210 is adapted to perform an RRP including replacing the HoA with the SHoA to perform an RRP with a third return routability unit 310 of the HA 300, and returning the keygen tokens to the first return routability unit 110 of the MN 100. The keygen tokens include the home keygen token and the care-of keygen token. The care-of keygen token is generated by the second return routability unit 210 according to the CoA of the MN 100, and is sent to the MN 100 in the CoT message in the RRP. The home keygen token is generated by the second return routability unit 210 according to the SHoA, and is sent to the MN 100 in the HoT message in the RRP.

The second return routability unit 210 outputs the generated keygen tokens to the Kbm unit 240. The Kbm unit 240 calculates and generates the Kbm based on the keygen tokens, and provides the Kbm to the second BU unit 220.

The second BU unit 220 is adapted to receive the BU message sent by the first BU unit 120 of the MN 100, decrypt the HoA in the BU message according to the Kbm provided by the Kbm unit 240, and bind the SHoA, HoA, and CoA of the MN 100. If the BU message includes the HoA index, the second BU unit 220 may further include an address index module for binding the HoA index value, SHoA, HoA, and CoA.

If the MN 100 includes the first sequence number unit 150, the CN 200 will include a corresponding second sequence number unit 250. The second sequence number unit 250 uses the same method to calculate the current sequence number as the first sequence number 150, so as to receive the BU message from the MN 100 correctly.

The HA 300 includes a third return routability unit 310, a second BU unit 220, and an SHoA unit 130. The SHoA unit 130 is adapted to calculate and generate the SHoA according to a shared key with the MN 100 and a message containing the CoA, the HoA, an address of the CN 200, and/or an address of the HA 300, and provide the SHoA to the third return routability unit 310 for use. The third return routability unit 310 is adapted to perform an RRP including replacing the HoA with the SHoA to perform the RRP with the second return routability unit 210 of the CN 200.

According to the embodiments of the present invention, the HoA is replaced with the SHoA in the RRP. After the Kbm is obtained, the HoA in the BU packet is sent as an encrypted option, so that the HoA appears only once in an encrypted form in the packet sent to the CN in the BU process, thereby improving the security of the HoA in the BU process. Further, according to the embodiments of the present invention, the HoA may be added to the expression for generating the SHoA, and thus multiple HoAs bound to the same CoA are different from one another to prevent the confusion. Moreover, according to the embodiments of the present invention, the HoA index is bound with the HoA and CoA, so that a new extension header containing the HoA index may be used to replace the HoA option or Type-2 routing header carrying the HoA in the subsequent packet transmission, which greatly saves the header space, provides higher security to mobile subscribers, and does not cause confusion when multiple HoAs of the MN are bound to the same CoA. In addition, according to the embodiments of the present invention, a method for calculating the sequence numbers of the BU packets is also provided to make the sequence numbers have a random increment that can be known by both the MN and CN, and thus the sequence numbers become untraceable.

In view of the above, the method for binding update in the mobile IPv6 and the mobile IPv6 communication system have been described in detail. The principle and implementation of the present invention are illustrated with specified embodiments. However, the above embodiments are only intended to explain the method and key points of the present invention, instead of limiting the scope thereof.

**Claims**

1. A mobile node, MN in an IPv6 communication system, comprising:

a first return routability unit (110), adapted to perform a return routability procedure, RRP, in which a home address, HoA, of the MN is replaced with a substitute of home address, SHoA, and during which keygen tokens are obtained from a correspondent node, CN;
a binding management key, Kbm, unit (140), adapted to calculate and generate the Kbm based on the keygen tokens; and
a first binding update, BU, unit (120), adapted to send a BU message to the CN by replacing the HoA of the MN with the SHoA; and carry the HoA encrypted with the Kbm in the BU message;

wherein the encrypted HoA is carried in an encrypted HoA option in the BU message; and

wherein the BU message further comprises an HoA index, the value of which is a pointer value and is corresponding to each HoA of the MN.

2. The MN in an IPv6 communication system according to claim 1, further comprising an SHoA unit (130) adapted to generate the SHoA according to a shared key with a home agent, HA, and a message containing a care-of address, CoA, of the MN, the HoA, an address of the CN, and/or an address of the HA.

3. The MN in an IPv6 communication system according to claim 1, wherein the HoA index is a mark of a storage position or an array subscript of an HoA list of the MN.

4. The MN in an IPv6 communication system according to claims 1 or 2, wherein the BU message further comprises a sequence number, and

the MN further comprises a first sequence number unit (150) adapted to obtain a current sequence number by adding a previous sequence number and a current sequence number increment, and the current sequence number increment is calculated according to the Kbm and the previous sequence number or a previous sequence number increment.

5. A method for binding update in the mobile IPv6, comprising:

performing, by a correspondent node, CN, a return routability procedure, RRP, in which a home address, HoA of a mobile node, MN, is replaced with a substitute of home address, SHoA;

receiving, by the CN, a binding update, BU, message &om the MN, wherein the BU message carries the SHoA, with which the HoA of the MN is replaced and the HoA encrypted with a binding management key, Kbm; wherein the Kbm is generated based on keygen tokens obtained by the MN from the CN in the RRP; and

binding, by the CN, the SHoA, the HoA, and a care-of address, CoA according to the BU message;

wherein the encrypted HoA is carried in an encrypted HoA option in the BU message;

wherein the BU message further comprises an HoA index, the value of which is a pointer value and is corresponding to each HoA of the MN; and

wherein the binding by the CN according to the BU message, further comprises that the CN binds the SHoA, the HoA, the HoA index, and the CoA according to the BU message.

6. The method for binding update in the mobile IPv6 according to claim 5, wherein the RRP is a procedure ensuring the security of the communication between the MN and the CN, comprising: sending, by the CN, the CoT message and the HoT message to the MN.

7. The method for binding update in the mobile IPv6 according to claim 6, wherein the keygen tokens comprise a home keygen token; and

the return routability procedure, RRP, comprises:

receiving, by the CN, a Home Test Init, HoTI, message forwarded by a home agent, HA from the MN, and the SHoA is carried in a destination option extension header of the HoTI message;

calculating, by the CN, the home keygen token according to the SHoA, and the SHoA is carried in a Type-2 routing header of a Home Test, HoT, message and the home keygen token is contained in the HoT message; and

returning, by the CN, the HoT message to the MN forwarded by the HA in a tunnel mode by searching for the corresponding HoA of the MN according to the SHoA in the Type-2 routing header.

8. The method for binding update in the mobile IPv6 according to claim 6, wherein the keygen tokens comprise a care-of keygen token; and

the RRP comprises:

receiving, by the CN, a Care-of Test Init, CoTI, message from the MN; and

returning, by the CN, a Care-of Test, CoT, message containing the care-of keygen token to the MN.

9. The method for binding update in the mobile IPv6 according to claim 5, wherein each value of the HoA index is a position mark or an array subscript of each HoA in an HoA list stored in the MN.

**10.** The method for binding update in the mobile IPv6 according to claim 5, wherein the SHoA is calculated according to a shared key between the MN and the HA and a message containing the CoA, the HoA, an address of the CN, and/or an address of the HA.

**11.** The method for binding update in the mobile IPv6 according to claim 9, wherein the SHoA is obtained according to an expression as follows:

$$\text{SHoA} = \text{First (M, PRF (Kmh, Message1))}$$

wherein the SHoA is the substitute of home address of the MN, the Kmh is the shared key between the MN and the HA, the Message 1 is the message containing the CoA and the HoA of the MN, the address of the CN, and/or the address of the HA, the PRF is a pseudo-random function, the First is a cut-off function, and the M is a natural number smaller than or equal to 128.

**12.** The method for binding update in the mobile IPv6 according to any one of claims 5 to 11, wherein the BU message further comprises a sequence number, the sequence number is a sum of a previous sequence number and a sequence number increment, and the sequence number increment is calculated according to the Kbm and the previous sequence number or a previous sequence number increment.

**13.** The method for binding update in the mobile IPv6 according to claim 12, wherein the sequence number increment is obtained according to an expression as follows:

seq_increment = First (N, PRF (Kbm, Message2))
wherein the seq_increment is the sequence number increment, the Kbm is the binding management key, the Message2 is a message containing the previous sequence number or the previous sequence number increment, the HoA and the CoA of the MN, and/or the address of the CN, the PRF is a pseudo-random function, the First is a cut-off function, and the N is a natural number.

**14.** The method for binding update in the mobile IPv6 according to claim 13, wherein if the sequence number increment is 0, another sequence number increment is calculated according to an expression as follows:

$$\text{seq\_increment} = \text{First (N, Kbm XOR HoA)}$$

wherein the HoA is the home address of the MN, and the XOR is an Exclusive-OR function.

**15.** A mobile IPv6 communication system, comprising a mobile node, MN (100), a correspondent node, CN (200), and a home agent, HA (300), wherein,
the MN (100) is adapted to send a Care-of Test Init, CoTI, message to the CN (200), send a Home Test Init, HoTI, message to the HA (300), receive a Care-of Test, CoT, massage containing a care-of keygen token returned by the CN (200), receive a Home Test, HoT, message containing a home keygen token forwarded by the HA (300), generate a binding management key, Kbm, based on the home keygen token and the care-of keygen token, and send to the CN a BU message including a substitute of home address, SHoA, with which a home address, HoA of the MN is replaced;
the HA (300) is adapted to forward the HoTI message to the CN (200), with carrying the SHoA in a destination option extension header containing an SHoA option of the HoTI message, receive the HoT message sent by the CN (200), search for the corresponding HoA of the MN (100) according to the SHoA in a Type-2 routing header of the HoT message, and forward the HoT message to the MN (100) in a tunnel mode; and
the CN (200) is adapted to receive the HoTI message forwarded by the HA (300), replace the HoA with the SHoA to generate the home keygen token, return the HoT message containing the home keygen token to the HA (300), and carrying the SHoA in the Type-2 routing header of the HoT message, and bind the SHoA, the HoA, and a care-of address, CoA, according to the BU message sent from the MN;
wherein the HoA, which is encrypted with the Kbm, is carried in an encrypted HoA option in the BU message; and
wherein the BU message further comprises an HoA index, the value of which is a pointer value and is corresponding to each HoA of the MN.

16. A correspondent node, CN, in an IPv6 communication system, comprising:

a second return routability unit (210), adapted to perform a return routability procedure, RRP, in which a home address, HoA, of the MN is replaced with a substitute of home address, SHoA and during which keygen tokens are returned to a mobile node, MN, in the RRP;
a binding management key, Kbm, unit (240), adapted to calculate and generate the Kbm based on the keygen tokens; and
a second binding update, BU, unit (220), adapted to obtain a home address, HoA, of the MN from a BU message sent by the MN, and bind a substitute of home address, SHoA, of the MN, the HoA of the MN, and a care-of address, CoA, of the MN; wherein the HoA is encrypted with the Kbm;
wherein the encrypted HoA is carried in an encrypted HoA option in the BU message;
wherein the BU message further comprises an HoA index, the value of which is a pointer value and is corresponding to each HoA of the MN;
wherein the HoA is obtained by being recovered from the encrypted HoA option with the Kbm; and
wherein the second BU unit (220) comprises an address index module adapted to bind a value of the HoA index, the SHoA, the HoA, and the CoA.

17. The CN in an IPv6 communication system according to claim 16, wherein the key tokens comprise a home keygen token and a care-of keygen token, the care-of keygen token is generated by the second return routability unit (210) according to the CoA of the MN and is sent to the MN in a Care-of Test, CoT, message in the RRP, and the home keygen token is generated by the second return routability unit (210) according to the SHoA of the MN and is sent to the MN in a Home Test, HoT, message in the RRP.

18. The CN in an IPv6 communication system according to claim 16, wherein
the RRP is a procedure ensuring the security of the communication between the MN and the CN, comprising:
sending, by the CN, the CoT message and the HoT message to the MN.

19. The CN in an IPv6 communication system according to any one of claims 16 to 18, wherein the BU message further comprises a sequence number, and
the CN further comprises a second sequence number unit (250) adapted to obtain a current sequence number by adding a previous sequence number and a current sequence number increment, and the current sequence number increment is calculated according to the Kbm and the previous sequence number or a previous sequence number increment.

20. The MN in an IPv6 communication system according to claim 1, wherein
the RRP is a procedure ensuring the security of the communication between the MN and the CN, comprising:
sending, by the CN, the CoT message and the HoT message to the MN.


**Patentansprüche**

1. Mobilknoten MN in einem IPv6-Kommunikationssystem, umfassend:

eine erste Return-Routability-Einheit (110), die dafür ausgelegt ist, eine Return Routability Procedure RRP auszuführen, wobei eine Heimatadresse HoA des MN durch eine Substitute of Home Address SHoA ersetzt wird und während der Keygen-Tokens von einem Korrespondentenknoten CN erhalten werden;
eine Einheit (140) des Binding Management Key Kbm, die dafür ausgelegt ist, den Kbm auf der Basis der Keygen-Tokens zu berechnen und zu erzeugen; und
eine erste Einheit (120) der Binding Update BU, die dafür ausgelegt ist, eine BU-Nachricht mittels Ersetzen der HoA des MN durch die SHoA zu dem CN zu senden;
und die mit dem Kbm verschlüsselte HoA in der BU-Nachricht zu führen;
wobei die verschlüsselte HoA in einer Verschlüsselte-HoA-Option in der BU-Nachricht geführt wird; und
wobei die BU-Nachricht ferner einen HoA-Index umfasst, dessen Wert ein Zeigerwert ist und jeder HoA des MN entspricht.

2. MN in einem IPv6-Kommunikationssystem nach Anspruch 1, ferner umfassend eine SHoA-Einheit (130), die dafür ausgelegt ist, die SHoA gemäß einem gemeinsam benutzten Schlüssel mit einem Home Agent HA und einer eine Care-of-Address CoA des MN, die HoA, eine Adresse des CN und/oder eine Adresse des HA enthaltenden Nachricht

EP 2 056 520 B1

zu erzeugen.

3. MN in einem IPv6-Kommunikationssystem nach Anspruch 1, wobei der HoA-Index eine Markierung einer Speicherposition oder ein Array-Subscript einer HoA-Liste des MN ist.

4. MN in einem IPv6-Kommunikationssystem nach Anspruch 1 oder 2, wobei die BU-Nachricht ferner eine Sequenznummer umfasst; und
der MN ferner eine erste Sequenznurnmemeinheit (150) umfasst, die dafür ausgelegt ist, eine aktuelle Sequenzummer durch Addieren einer vorherigen Sequenznummer und eines aktuellen Sequenznummerninkrements zu erhalten, und das aktuelle Sequenznummerninkrement gemäß dem Kbm und der vorherigen Sequenznummer oder einem vorherigen Sequenznummerninkrement berechnet wird.

5. Verfahren zum Binding Update im Mobil-IPv6, mit den folgenden Schritten:

Ausführen einer Return Routability Procedure RRP durch einen Korrespondentenknoten CN, wobei eine Heimatadresse HoA eines Mobilknotens MN durch eine Substitute of Home Address SHoA ersetzt wird;
Empfangen einer Nachricht der Binding Update BU durch den CN von dem MN,
wobei die BU-Nachricht die SHoA führt, womit die HoA des MN ersetzt wird und
die HoA mit einem Binding Management Key Kbm verschlüsselt wird; wobei der Kbm auf der Basis von Keygen-Tokens erzeugt wird, die durch den MN von dem CN in der RRP erhalten werden; und
Binden der SHoA, der HoA und einer Care-of-Address CoA gemäß der BU-Nachricht durch den CN;
wobei die verschlüsselte HoA in einer Verschlüsselte-HoA-Option in der BU-Nachricht geführt wird;
wobei die BU-Nachricht ferner einen HoA-Index umfasst, dessen Wert ein Zeigerwert ist und jeder HoA des MN entspricht; und
wobei das Binden durch den CN gemäß der BU-Nachricht ferner umfasst, dass der CN die SHoA, die HoA, den HoA-Index und die CoA gemäß der BU-Nachricht bindet.

6. Verfahren zum Binding Update im Mobil-IPv6 nach Anspruch 5, wobei die RRP eine Prozedur ist, die die Sicherheit der Kommunikation zwischen dem MN und dem CN sicherstellt, mit dem folgenden Schritt: Senden der CoT-Nachricht und der HoT-Nachricht durch den CN zu dem MN.

7. Verfahren zum Binding Update im Mobil-IPv6 nach Anspruch 6, wobei die Keygen-Tokens ein Heimat-Keygen-Token umfassen; und
die Return-Routability Procedure RRP Folgendes umfasst:

Empfangen einer durch einen Heimatagenten HA aus dem MN weitergeleiteten Nachricht des Home Test Init HoTI durch den CN, und die SHoA wird in einem Zieloptions-Erweiterungsheader der HoTI-Nachricht geführt;
Berechnen des Heimat-Keygen-Token durch den CN gemäß der SHoA, und die SHoA wird in einem Type-2-Routing-Header einer Nachricht des Home Test HoT geführt und das Heimat-Keygen-Token ist in der HoT-Nachricht enthalten; und
Zurücksenden der HoT-Nachricht durch den CN an den MN, weitergeleitet durch den HA in einem Tunnelmodus durch Suchen nach der entsprechenden HoA des MN gemäß der SHoA in dem Type-2-Routing-Header.

8. Verfahren zum Binding Update im Mobil-IPv6 nach Anspruch 6, wobei die Keygen-Tokens ein Care-of Keygen Token umfassen; und
die RRP Folgendes umfasst:

Empfangen einer Nachricht des Care-of-Test Init CoTI durch den CN von dem MN; und
Zurücksenden einer Nachricht des Care-of Test CoT durch den CN, die das Care-of Keygen Token enthält, an den MN.

9. Verfahren zum Binding Update im Mobil-IPv6 nach Anspruch 5, wobei jeder Wert des HoA-Index eine Positionsmarkierung oder ein Array-Subscript jeder HoA in einer in dem MN gespeicherten HoA-Liste ist.

10. Verfahren zum Binding Update im Mobil-IPv6 nach Anspruch 5, wobei die SHoA gemäß einem gemeinsam benutzten Schlüssel zwischen dem MN und dem HA und einer die CoA, die HoA, eine Adresse des CN und/oder eine Adresse des HA enthaltenden Nachricht berechnet wird.

**11.** Verfahren zum Binding Update im Mobil-IPv6 nach Anspruch 9, wobei die SHoA gemäß einem Ausdruck folgendermaßen erhalten wird:

$$SHoA = First\ (M, PRF\ (Kmh, Message1))$$

wobei SHoA die Substitute of Home Address des MN ist, Kmh der gemeinsam benutzte Schlüssel zwischen dem MN und dem HA ist, Message 1 die die CoA und
die HoA des MN, die Adresse des CN und/oder die Adresse des HA enthaltende Nachricht ist, PRF eine Pseudozufallsfunktion ist, First eine Abschneidefunktion ist und M eine natürliche Zahl kleiner oder gleich 128 ist.

**12.** Verfahren zum Binding Update im Mobil-IPv6 nach einem der Ansprüche 5 bis 11, wobei die BU-Nachricht ferner eine Sequenznummer umfasst, wobei die Sequenznummer eine Summe einer vorherigen Sequenznummer und eines Sequenznummerninkrements ist und das Sequenznummerninkrement gemäß dem Kbm und der vorherigen Sequenznummer oder einem vorherigen Sequenznummerninkrement berechnet wird.

**13.** Verfahren zum Binding Update im Mobil-IPv6 nach Anspruch 12, wobei das Sequenznummerninkrement gemäß einem Ausdruck folgendermaßen erhalten wird:

$$seq\_increment = First\ (N, PRF\ (Kbm, Message2))$$

wobei seq_increment das Sequenznummerninkrement, Kbm der Binding Management Key, Message2 eine die vorherige Sequenznummer oder das vorherige Sequenznummerninkrement, die HoA und die CoA des MN und/oder die Adresse des CN enthaltende Nachricht, PRF eine Pseudozufallsfunktion, First eine Abschneidefunktion und N eine natürliche Zahl ist.

**14.** Verfahren zum Binding Update im Mobil-IPv6 nach Anspruch 13, wobei, wenn das Sequenznummerninkrement 0 ist, ein anderes Sequenznummerninkrement gemäß einem Ausdruck folgendermaßen berechnet wird:

$$seq\_increment = First\ (N, Kbm.XOR\ HoA)$$

wobei die HoA die Heimatadresse des MN und XOR eine Exclusive-OR-Funktion ist.

**15.** Mobil-IPv6-Kommunikationssystem, das einen Mobilknoten MN (100), einen Korrespondentenknoten CN (200) und einen Heimatagenten HA (300) umfasst, wobei
der MN (100) dafür ausgelegt ist, eine Nachricht des Care-of-Test Init CoTI zu dem CN (200) zu senden, eine Nachricht des Home Test Init HoTI zu dem HA (300) zu senden, eine Nachricht des Care-of Test CoT zu empfangen, die ein durch den CN (200) zurückgesendetes Care-of-Keygen Token enthält, eine Nachricht des Home Test HoT zu empfangen, die ein durch den HA (300) weitergeleitetes Heimat-Keygen-Token enthält, auf der Basis des Heimat-Keygen-Token und des Care-of Keygen Token einen Binding Management Key Kbm zu erzeugen und eine BU-Nachricht zu dem CN zu senden, die eine Substitute of Home Address SHoA enthält, womit eine Heimatadresse HoA des MN ersetzt wird;
der HA (300) dafür ausgelegt ist, die HoTI-Nachricht zu dem CN (200) weiterzuleiten, mit Führung der SHoA in einem Zieloptions-Erweiterungsheader, der eine SHoA-Option der HoTI-Nachricht enthält, eine durch den CN (200) gesendete HoT-Nachricht zu empfangen, gemäß der SHoA in einem Type-2-Routing-Header der HoT-Nachricht nach der entsprechenden HoA des MN (100) zu suchen und die HoT-Nachricht in einem Tunnelmodus zu dem MN (100) weiterzuleiten; und
der CN (200) dafür ausgelegt ist, die durch den HA (300) weitergeleitete HoTI-Nachricht zu empfangen, die HoA durch die SHoA zu ersetzen, um das Heimat-Keygen-Token zu erzeugen, die HoT-Nachricht, die das Heimat-Keygen-Token enthält, zu dem HA (300) zurückzusenden und zum Führen der SHoA in dem Type-2-Routing-Header der HoT-Nachricht, und die SHoA, die HoA und eine Care-of Address CoA gemäß der von dem MN gesendeten BU-Nachricht zu binden;
wobei die HoA, die mit dem Kbm verschlüsselt wird, in einer Verschlüsselte-HoA-Option in der BU-Nachricht geführt wird; und
wobei die BU-Nachricht ferner einen HoA-Index umfasst, dessen Wert ein Zeigerwert ist und jeder HoA des MN entspricht.

16. Korrespondentenknoten CN in einem IPv6-Kommunikationssystem, umfassend:

eine zweite Return-Routability-Einheit (210), die dafür ausgelegt ist, eine Return Routability Procedure RRP auszuführen, wobei eine Heimatadresse HoA des MN durch eine Substitute of Home Address und SHoA ersetzt wird und während der Keygen-Tokens an einen Mobilknoten MN in der RRP zurückgesendet werden;
eine Einheit (240) des Binding Management Key Kbm, die dafür ausgelegt ist, den Kbm auf der Basis der Keygen-Tokens zu berechnen und zu erzeugen; und
eine zweite Einheit (220) zum Binding Update BU, die dafür ausgelegt ist, eine Heimatadresse HoA des MN aus einer durch den MN gesendeten BU-Nachricht zu erhalten und eine Substitute of Home Address SHoA des MN, die HoA des MN und
eine Care-of Address CoA des MN zu binden; wobei die HoA mit dem Kbm verschlüsselt wird;
wobei die verschlüsselte HoA in einer Verschlüsselte-HoA-Option in der BU-Nachricht geführt wird;
wobei die BU-Nachricht ferner einen HoA-Index umfasst, dessen Wert ein Zeigerwert ist und jeder HoA des MN entspricht;
wobei die HoA erhalten wird, indem sie aus der Verschlüsselte-HoA-Option mit dem Kbm wiederhergestellt wird; und
wobei die zweite BU-Einheit (220) ein Adressenindexmodul umfasst, das dafür ausgelegt ist, einen Wert des HoA-Index, die SHoA, die HoA und die CoA zu binden.

17. CN in einem IPv6-Kommunikationssystem nach Anspruch 16, wobei die Schlüssel-Tokens ein Heimat-Keygen-Token und ein Care-of Keygen Token umfassen, wobei das Care-of Keygen Token durch die zweite Return-Routability-Einheit (210) gemäß der CoA des MN erzeugt und in einer Nachricht des Care-of Test CoT in der RRP zu dem MN gesendet wird und das Heimat-Keygen-Token durch die zweite Return-Routability-Einheit (210) gemäß der SHoA des MN erzeugt und in einer Nachricht des Home Test HoT in der RRP zu dem MN gesendet wird.

18. CN in einem IPv6-Kommunikationssystem nach Anspruch 16, wobei die RRP eine Prozedur ist, die die Sicherheit der Kommunikation zwischen dem MN und dem CN sicherstellt, umfassend: Senden der CoT-Nachricht und der Hot-Nachricht durch den CN zu dem MN.

19. CN in einem IPv6-Kommunikationssystem nach einem der Ansprüche 16 bis 18, wobei die BU-Nachricht ferner eine Sequenznummer umfasst; und
der CN ferner eine zweite Sequenznummerneinheit (250) umfasst, die dafür ausgelegt ist, eine aktuelle Sequenznummer durch Addieren einer vorherigen Sequenznummer und eines aktuellen Sequenznummerninkrements zu erhalten und das aktuelle Sequenznummerninkrement gemäß dem Kbm und der vorherigen Sequenznummer oder einem vorherigen Sequenz.nummerninkrement berechnet wird.

20. MN in einem IPv6-Kommunikationssystem nach Anspruch 1, wobei die RRP eine Prozedur ist, die die Sicherheit der Kommunikation zwischen dem MN und dem CN sicherstellt, umfassend: Senden der CoT-Nachricht und der HoT-Nachricht durch den CN zu dem MN.

**Revendications**

1. Noeud mobile, MN, dans un système de communication IPv6, comprenant :

une première unité de routabilité de retour (110), adaptée de façon à exécuter une procédure de routabilité de retour, RRP, dans laquelle une adresse d'origine, HoA, du MN est remplacée par un substitut d'adresse d'origine, SHoA, et au cours de laquelle des jetons de génération de clés sont obtenus d'un noeud correspondant, CN,
une unité de clé de gestion de liaison, Kbm (140), adaptée de façon à calculer et à générer la Kbm en fonction des jetons de génération de clés, et
une première unité de mise à jour de liaison, BU (120), adaptée de façon à envoyer un message de BU au CN en remplaçant la HoA du MN par le SHoA et à transporter la HoA chiffrée avec la Kbm dans le message de BU,
où la HoA chiffrée est transportée dans une option HoA chiffrée dans le message de BU, et
où le message de BU comprend en outre un indice HoA, dont la valeur est une valeur de pointeur et qui correspond à chaque HoA du MN.

**2.** Noeud mobile MN d'un système de communication IPv6 selon la revendication 1, comprenant en outre une unité SHoA (130) adaptée de façon à générer le SHoA selon une clé partagée avec un agent d'origine, HA, et un message contenant une adresse temporaire, CoA, du MN, la HoA, une adresse du CN et/ou une adresse du HA.

**3.** Noeud mobile MN d'un système de communication IPv6 selon la revendication 1, où l'indice HoA est une marque d'une position de mémoire ou d'un indice de matrice d'une liste HoA du MN.

**4.** Noeud mobile MN d'un système de communication IPv6 selon la revendication 1 ou 2, où le message de BU comprend en outre un numéro de séquence, et
le MN comprend en outre une première unité de numéro de séquence (150) adaptée de façon à obtenir un numéro de séquence actuel en ajoutant un numéro de séquence antérieur et un incrément de numéro de séquence actuel, et l'incrément de numéro de séquence actuel est calculé selon la Kbm et le numéro de séquence antérieur ou un incrément de numéro de séquence antérieur.

**5.** Procédé de mise à jour de liaison du système IPv6 mobile, comprenant :

l'exécution, par un noeud correspondant, CN, d'une procédure de routabilité de retour, RRP, dans laquelle une adresse d'origine, HoA, d'un noeud mobile, MN, est remplacée par un substitut d'adresse d'origine, SHoA,
la réception, par le CN, d'un message de mise à jour de liaison, BU, provenant du MN, où le message de BU transporte le SHoA par lequel la HoA du MN est remplacée, et la HoA chiffrée avec une clé de gestion de liaison, Kbm, où la Kbm est générée en fonction de jetons de génération de clés obtenus par le MN du CN dans la RRP, et
la liaison, par le CN, du SHoA, de la HoA et d'une adresse temporaire, CoA, selon le message de BU,
où la HoA chiffrée est transportée dans une option HoA chiffrée dans le message de BU,
où le message de BU comprend en outre un indice HoA, dont la valeur est une valeur de pointeur et qui correspond à chaque HoA du MN, et
où la liaison par le CN selon le message de BU comprend en outre le fait que le CN lie le SHoA, la HoA, l'indice HoA et la CoA selon le message de BU.

**6.** Procédé de mise à jour de liaison du système IPv6 mobile selon la revendication 5, où la RRP est une procédure destinée à assurer la sécurité de la communication entre le MN et le CN, comprenant l'envoi, par le CN, du message CoT et du message HoT au MN.

**7.** Procédé de mise à jour de liaison du système IPv6 mobile selon la revendication 6, où les jetons de génération de clés comprennent un jeton de génération de clés d'origine, et
la procédure de routabilité de retour, RRP, comprend :

la réception, par le CN, d'un message d'initialisation de test d'origine, HoTI, transmis par un agent d'origine, HA, provenant du MN, et le SHoA est transporté dans un en-tête d'extension d'option de destination du message HoTI,
le calcul, par le CN, du jeton de génération de clés d'origine selon le SHoA, et le SHoA est transporté dans un en-tête d'acheminement de Type-2 d'un message de test d'origine, HoT, et le jeton de génération de clés d'origine est contenu dans le message HoT, et
le renvoi, par le CN, du message HoT au MN transmis par le HA dans un mode tunnel en recherchant la HoA correspondante du MN selon le SHoA de l'en-tête d'acheminement de Type-2.

**8.** Procédé de mise à jour de liaison du système IPv6 mobile selon la revendication 6, où les jetons de génération de clés comprennent un jeton de génération de clés temporaire, et
la RRP comprend :

la réception, par le CN, d'un message d'initialisation de test temporaire, CoTI, provenant du MN, et
le renvoi, par le CN, d'un message de test temporaire, CoT, contenant le jeton de génération de clés temporaire au MN.

**9.** Procédé de mise à jour de liaison du système IPv6 mobile selon la revendication 5, où chaque valeur de l'indice HoA est une marque de position de mémoire ou un indice de matrice de chaque HoA d'une liste HoA conservée en mémoire dans le MN.

**10.** Procédé de mise à jour de liaison du système IPv6 mobile selon la revendication 5, où le SHoA est calculé selon une clé partagée entre le MN et le HA et un message contenant la CoA, la HoA, une adresse du CN et/ou une adresse du HA.

**11.** Procédé de mise à jour de liaison du système IPv6 mobile selon la revendication 9, où le SHoA est obtenu selon une expression comme suit :

$$SHoA = Premier\ (M,\ PRF\ (Kmh,\ Message1))$$

où le SHoA est le substitut d'adresse d'origine du MN, la Kmh est la clé partagée entre le MN et le HA, le Message 1 est le message contenant la CoA et la HoA du MN, l'adresse du CN et/ou l'adresse du HA, la PRF est une fonction pseudo-aléatoire, le Premier est une fonction de coupure et le M est un nombre naturel plus petit que ou égal à 128.

**12.** Procédé de mise à jour de liaison du système IPv6 mobile selon l'une quelconque des revendications 5 à 11, où le message de BU comprend en outre un numéro de séquence, le numéro de séquence est une somme d'un numéro de séquence antérieur et d'un incrément de numéro de séquence et l'incrément de numéro de séquence est calculé selon la Kbm et le numéro de séquence antérieur ou un incrément de numéro de séquence antérieur.

**13.** Procédé de mise à jour de liaison du système IPv6 mobile selon la revendication 12, où l'incrément de numéro de séquence est obtenu selon une expression comme suit :

$$seq\_increment = Premier\ (N,\ PRF\ (Kbm,\ Message2))$$

où le seq_increment est l'incrément de numéro de séquence, la Kbm est l'unité de clé de gestion de liaison, le Message2 est un message contenant le numéro de séquence antérieur ou l'incrément de numéro de séquence antérieur, la HoA et la CoA du MN et/ou l'adresse du CN, la PRF est une fonction pseudo-aléatoire, le Premier est une fonction de coupure et le N est un nombre naturel.

**14.** Procédé de mise à jour de liaison du système IPv6 mobile selon la revendication 13, où si l'incrément de numéro de séquence est 0, un autre incrément de numéro de séquence est calculé selon une expression comme suit :

$$seq\_increment = Premier\ (N,\ Kbm\ XOR\ HoA)$$

où la HoA est l'adresse d'origine du MN et le XOR est une fonction OU exclusif.

**15.** Système de communication IPv6 mobile, comprenant un noeud mobile, MN (100), un noeud correspondant, CN (200) et un agent d'origine, HA (300), où le MN (100) est adapté de façon à envoyer un message d'initialisation de test temporaire, CoTI, au CN (200), à envoyer un message d'initialisation de test d'origine, HoTI, au HA (300), à recevoir un message de test temporaire, CoT, contenant un jeton de génération de clés temporaire renvoyé par le CN (200), à recevoir un message de test d'origine, HoT, contenant un jeton de génération de clés d'origine transmis par le HA (300), à générer une unité de clé de gestion de liaison, Kbm, basée sur le jeton de génération de clés d'origine et le jeton de génération de clés temporaire, et à envoyer au CN un message de BU contenant un substitut d'adresse d'origine, SHoA, par lequel une adresse d'origine, HoA, du MN est remplacée, le HA (300) est adapté de façon à transmettre le message HoTI au CN (200), avec le transport du SHoA dans un en-tête d'extension d'option de destination contenant une option SHoA du message HoTI, à recevoir le message HoT envoyé par le CN (200), à rechercher la HoA correspondante du MN (100) selon le SHoA dans un en-tête d'acheminement de Type-2 du message HoT, et à transmettre le message HoT au MN (100) dans un mode tunnel, et le CN (200) est adapté de façon à recevoir le message HoTI transmis par le HA (300), à remplacer la HoA par le SHoA de façon à générer le jeton de génération de clés d'origine, à renvoyer le message HoT contenant le jeton de génération de clés d'origine au HA (300), et à transporter le SHoA dans l'en-tête d'acheminement de Type-2 du message HoT, et à lier le SHoA, la HoA et une adresse temporaire, CoA, selon le message de BU envoyé à partir du MN, où la HoA, qui est chiffrée avec la Kbm, est transportée dans une option HoA chiffrée dans le message de BU, et où le message de BU comprend en outre un indice HoA, dont la valeur est une valeur de pointeur et qui correspond à chaque HoA du MN.

16. Noeud correspondant, CN, d'un système de communication IPv6, comprenant :

une deuxième unité de routabilité de retour (210), adaptée de façon à exécuter une procédure de routabilité de retour, RRP, dans laquelle une adresse d'origine, HoA, du MN est remplacée par un substitut d'adresse d'origine, SHoA, et, au cours de laquelle des jetons de génération de clés sont renvoyés à un noeud mobile, MN, dans la RRP,
une unité de clé de gestion de liaison, Kbm (240), adaptée de façon à calculer et à générer la Kbm en fonction des jetons de génération de clés, et
une deuxième unité de mise à jour de liaison, BU (220), adaptée de façon à obtenir une adresse d'origine, HoA, du MN à partir d'un message de BU envoyé par le MN, et à lier un substitut d'adresse d'origine, SHoA, du MN, la HoA du MN et une adresse temporaire, CoA, du MN, où la HoA est chiffrée avec la Kbm,
où la HoA chiffrée est transportée dans une option HoA chiffrée dans le message de BU, et
où le message de BU comprend en outre un indice HoA, dont la valeur est une valeur de pointeur et qui correspond à chaque HoA du MN,
où la HoA est obtenue en étant récupérée à partir de l'option HoA chiffrée avec la Kbm, et
où la deuxième unité BU (220) comprend un module d'indice d'adresse adapté de façon à lier une valeur de l'indice HoA, le SHoA, la HoA et la CoA.

17. Noeud correspondant CN d'un système de communication IPv6 selon la revendication 16, où les jetons de clé comprennent un jeton de génération de clés d'origine et un jeton de génération de clés temporaire, le jeton de génération de clés temporaire est générée par la deuxième unité de routabilité de retour (210) selon la CoA du MN et est envoyé au MN dans un message de test temporaire, CoT, dans la RRP, et le jeton de génération de clés d'origine est généré par la deuxième unité de routabilité de retour (210) selon le SHoA du MN et est envoyé au MN dans un message de test d'origine, HoT, dans la RRP.

18. Noeud correspondant CN d'un système de communication IPv6 selon la revendication 16, où
la RRP est une procédure destinée à assurer la sécurité de la communication entre le MN et le CN, comprenant :
l'envoi, par le CN, du message CoT et du message HoT au MN.

19. Noeud correspondant CN d'un système de communication IPv6 selon l'une quelconque des revendications 16 à 18, où le message de BU comprend en outre un numéro de séquence, et
le CN comprend en outre une deuxième unité de numéro de séquence (250) adaptée de façon à obtenir un numéro de séquence actuel en ajoutant un numéro de séquence antérieur et un incrément de numéro de séquence actuel, et l'incrément de numéro de séquence actuel est calculé selon la Kbm et le numéro de séquence antérieur ou un incrément de numéro de séquence antérieur.

20. Noeud mobile MN d'un système de communication IPv6 selon la revendication 1, où
la RRP est une procédure destinée à assurer la sécurité de la communication entre le MN et le CN, comprenant :
l'envoi, par le CN, du message CoT et du message HoT au MN.

A111 — The MN sends the CoTI to the CN

A112 — The CN returns the CoT containing keygen tokens to the MN

A121 — The MN sends the HoTI to the HA in a tunnel mode

A122 — The HA replaces the HoA option in a destination option extension header with an SHoA option, and forwards the HoTI to the CN

A123 — The CN replaces the HoA in a Type-2 routing header with the SHoA, and returns the HoT containing the home keygen token to the HA

A124 — The HA searches for the HoA according to the SHoA, and sends the HoT to the MN in the tunnel mode

A2 — The MN calculates the Kbm

A3 — The MN replaces the HoA in a destination option extension header with the SHoA, and sends a BU message containing the encrypted HoA to the CN

A4 — The CN recovers the HoA through the Kbm, and binding updates the SHoA, HoA, and CoA

# FIG. 1

FIG. 2

FIG. 3

Mobile IPv6 communication system

MN
100

CN
200

HA
300

FIG. 4

FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2004236937 A1